# EUROPEAN PATENT APPLICATION

(11) **EP 4 154 979 A1**
(43) Date of publication of application: **29.03.2023**
(21) Application number: 21842297.0
(22) Date of filing: 28.04.2021
(51) Int. Cl.: B01L 3/00

(54) **SAMPLE PRETREATMENT TUBE**

(30) Priority: 15.07.2020 KR 20200087199
(71) Applicant: Absology Co., Ltd., Anyang-si, Gyeonggi-do 14057 (KR)
(72) Inventor: JEONG, Jae Un, Hwaseong-si Gyeonggi-do 18601 (KR); SEO, Joon Seok, Yongin-si Gyeonggi-do 16998 (KR); LEE, Seong Ho, Seoul 02464 (KR)
(74) Representative: BCKIP Part mbB
(86) International application number: PCT/KR2021/005348
(87) International publication number: WO 2022/014830

(57) **Abstract**

A sample pretreatment tube is disclosed. The sample pretreatment tube includes a first tube receiving a primary reagent and a second tube receiving a secondary reagent. The sample pretreatment tube can easily perform sequential reactions by allowing a primary reaction solution to be immediately discharged from the first tube to the second tube by breaking a separation membrane formed at a lower end of the first tube using a pipette, and can limit an insertion depth of the pipette using a stopper formed inside the first tube, thereby preventing damage to the second tube due to the pipette while allowing a space to be formed inside the first tube to facilitate discharge of a primary reaction solution, thus making it possible to immediately perform secondary reaction.

## Description

### [Technical Field]

The present invention relates to a sample pretreatment tube and, more particularly, to a sample pretreatment tube that includes a first tube receiving a primary reagent and a second tube receiving a secondary reagent, wherein the first tube is formed at a lower end thereof with a separation membrane, whereby a primary reaction solution can be immediately discharged from the first tube to the second tube by breaking the separation membrane using a pipette and thus secondary reaction can be performed in a rapid and accurate manner.

### [Background Art]

In general, a sample pretreatment process for analysis includes several steps such as separation, concentration, and treatment with reagents. In particular, in handling of very small volumes of blood or other samples, a worker repeats a process of separately collecting very small volumes of a sample and a reagent using a pipette to induce reaction between the sample and the reagent in a small container such as a test tube or microtube and collecting a reaction solution from the container to induce reaction between the reaction solution and another reagent in another container. Here, errors often occur since it is difficult for the worker to inject precise volumes of liquid into the pipette each time they perform the process.

In addition, in use of multiple reagents as in competitive immunoassay, required volumes of each of the reagents need to be collected and separately placed in each small container such as a test tube or microtube. In order to perform sequential reactions, required volumes of a reaction solution obtained through primary reaction needs to be collected and transferred to a container containing another reagent. Here, if the required volumes to be collected are very small, it is difficult for a user to collect the exact required volumes.

Korean Patent Laid-open Publication No. 10-2015-0112216) relates to a double sample tube including a main tube and a soft recovery tube detachably disposed in the main tube, wherein small volumes of a sample can be collected without any loss through separation of the soft recovery tube containing the small volumes of the sample from the main tube. However, despite being convenient for performing a single reaction, the double sample has a problem in that multiple separate microtubes are required to perform secondary reaction subsequent to primary reaction. Moreover, the double sample is difficult to handle due to the presence of several soft recovery tubes containing the sample.

### [Disclosure]

### [Technical Problem]

Embodiments of the present invention are conceived to solve such problems in the art and it is an object of the present invention to provide a sample pretreatment tube that includes a first tube receiving a primary reagent, a second tube receiving a secondary reagent, and a separation membrane formed at a bottom of the first tube, wherein the sample pretreatment tube can easily perform sequential reactions by allowing a user to break the separation membrane formed at the bottom of the first tube using a pipette to immediately discharge a primary reaction solution from the first tube to the second tube, and can limit the insertion depth of the pipette using a stopper formed inside the first tube, thereby preventing damage to the second tube due to the pipette while allowing a space through which the primary reaction solution can flow to be formed inside the first tube to facilitate discharge of the primary reaction solution.

### [Technical Solution]

In accordance with one aspect of the present invention, a sample pretreatment tube includes: a cap; a first tube coupled at an upper portion thereof to the cap and formed at a lower portion thereof with a separation membrane having a predetermined thickness to receive a primary reagent therein; a second tube coupled to the lower portion of the first tube and receiving a secondary reagent therein; and a stopper formed inside the first tube to limit an insertion depth of a pipette inserted into the sample pretreatment tube and to facilitate a flow of a reaction solution.

The stopper may include multiple stopper wings protruding radially inward from an inner surface of the first tube, the multiple stopper wings being arranged at regular intervals in a radial pattern.

The first tube may include: a cap coupling portion having a first tube thread formed on an upper outer surface of the first tube; a second tube coupling portion having a connection thread formed on a lower inner surface of the first tube; and a grip formed on a lower outer surface of the first tube.

The sample pretreatment tube may further include: an additional tube disposed between the first tube and the second tube and formed at a lower portion thereof with a separation membrane having a predetermined thickness to receive an additional reagent therein.

### [Advantageous Effects]

In the sample pretreatment tube according to the present invention, after completion of primary reaction in the first tube, a primary reaction solution can be immediately discharged to the second tube connected to the lower portion of the first tube by breaking the separation membrane formed at the lower end of the first tube using a pipette, thereby allowing sequential reactions to be easily performed.

In addition, in the sample pretreatment tube according to the present invention, the insertion depth of the pipette can be limited by the stopper disposed inside the first tube such that a tip of the pipette does not contact an end of the second tube, thereby preventing damage to the second tube due to the pipette while facilitating collection of a secondary reaction solution by securing a gap between the tip of the pipette and the second tube.

In addition, due to the stopper including stopper wings protruding radially inward from an inner surface of the first tube and arranged at regular intervals in a radial pattern, a space can be formed between an inner wall of the first tube and the pipette having passed through the separator membrane formed at the lower end of the first tube, thereby allowing the primary reaction solution to be smoothly discharged from the first tube to the second tube.

In addition, with multiple additional tubes disposed between the first tube and the second tube and receiving an additional reagent therein, an n^{th} order reaction can be performed, thereby eliminating the need for multiple separate microtubes and providing improved handleability.

### [Description of Drawings]

FIG. 1(a) is a schematic perspective view of a sample pretreatment tube according to the present invention.
FIG. 1(b) is an exploded perspective view of the sample pretreatment tube of FIG. 1(a).
FIG. 2 is a schematic view of a cap of FIG. 1.
FIG. 3 is a schematic view of a first tube of the sample pretreatment tube according to one embodiment of the present invention.
FIG. 4 and FIG. 5 are schematic views of a stopper of the sample pretreatment tube according to various embodiments of the present invention.
FIG. 6 is a schematic view of a second tube of FIG. 1.
FIG. 7 to FIG. 9 are views illustrating operation of the sample pretreatment tube according to one embodiment of the present invention.

### [Mode for Invention]

The above and other aspects, features, and advantages of the present invention will become apparent from the detailed description of the following embodiments in conjunction with the accompanying drawings. It should be understood that the present invention is not limited to the following embodiments and may be embodied in different ways, and that the embodiments are provided for complete disclosure and thorough understanding of the present invention by those skilled in the art. The scope of the present invention is defined only by the claims. Like components will be denoted by like reference numerals throughout the specification.

Hereinafter, embodiments of the present invention will be described with reference to the accompanying drawings.

As used herein, the term "pipette" refers to a laboratory tool that is used to collect or transfer liquid samples. Generally, the pipette has a tube shape, which has a wide upper portion and a downwardly tapered lower portion, and is formed of glass or a plastic material. The pipette is connected at an upper end thereof to a pumping device adapted to adjust an internal pressure of the pipette and is formed at a lower end thereof with a tiny tube, through which a liquid sample is collected or transferred upon operation of the pumping device.

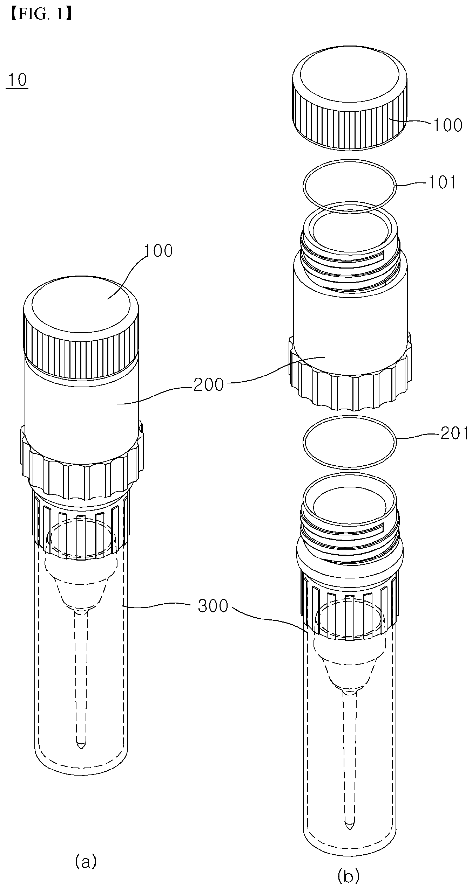

FIG. 1(a) is a schematic perspective view of a sample pretreatment tube according to the present invention, and FIG. 1(b) is an exploded perspective view of the sample pretreatment tube of FIG. 1(a).

Referring to FIG. 1, a sample pretreatment tube 10 according to the present invention may include a cap 100, a first tube 200, and a second tube 300.

The cap 100 is coupled to an upper portion of the first tube 200 to seal the first tube 200. When the cap 100 is open, a primary reagent 510 or a sample 500 can be introduced into the first tube 200 and, when the cap 100 is closed, leakage of a fluid out of the first tube 200 can be prevented. In addition, O-rings 400 may be disposed between the cap 100 and the first tube 200 and between the first tube 200 and the second tube 300, respectively. Each of the O-rings 400 may be an elastic sealing member. Upon coupling the cap 100, the first tube 200, and the second tube 300 to one another, the O-rings 400 provide sealing therebetween.

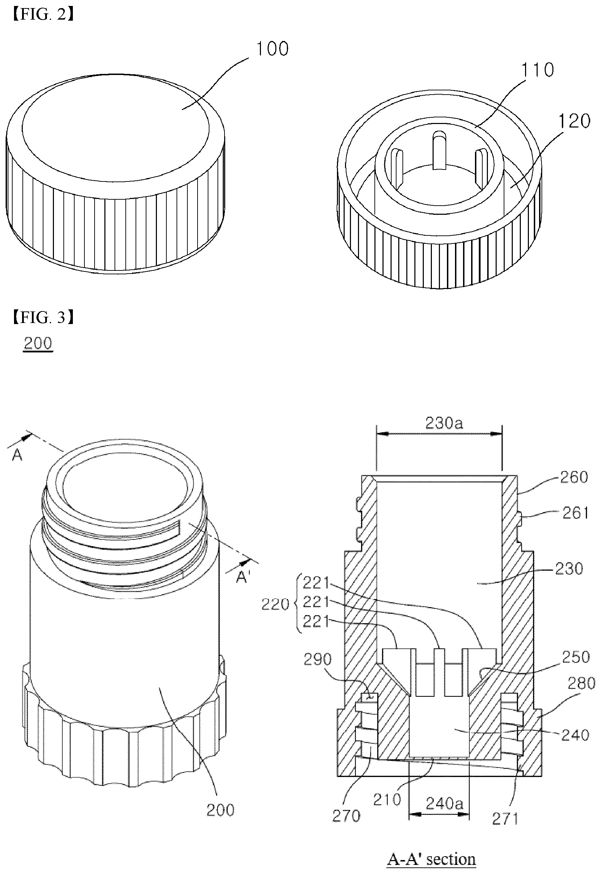

FIG. 2 is a schematic view of the cap of FIG. 1.

Referring to FIG. 2, the cap 100 according to the present invention may include a first tube support 110 and a cap O-ring groove 120.

The first tube support 110 has a circular tubular shape and downwardly protrudes a predetermined length from an upper inner surface of the cap 100. Upon coupling the cap 100 to the first tube 200, the first tube support 110 is inserted into the first tube 200 to support the first tube 200. In addition, the first tube support 110 may have an additional rigid support therein.

The cap O-ring groove 120 may be formed to a predetermined radial depth along an upper outer surface of the first tube support 110 to allow the O-ring 400 to be inserted into and coupled to the cap O-ring groove 120.

In addition, a cap thread (not shown) may be formed along an inner surface of the cap 100 to be screwed into an upper portion of the first tube 200, or a coupling protrusion (not shown) may be formed along the inner surface of the cap 100 to be press-fitted into the upper portion of the first tube 200.

FIG. 3 is a schematic view of the first tube of the sample pretreatment tube according to one embodiment of the present invention.

Referring to FIG. 3, the first tube 200 according to this embodiment may include a stopper 220.

The stopper 220 may include multiple stopper wings 221 radially protruding inwards from an inner surface of the first tube 200 and arranged at regular intervals in a radial pattern. The stopper 220 serves to limit an insertion depth of a pipette 20 inserted from the outside of the sample pretreatment tube.

In addition, the first tube 200 may include a first receiving portion 230, a second receiving portion 240, and a fluid flow guide portion 250. Here, the multiple stopper wings 221 of the stopper 220 may be disposed in the first receiving portion 230 or the fluid flow guide portion 250.

Here, the first receiving portion 230 may have the shape of a cylinder having a first diameter 230a, and may have an open upper end, through which the pipette 20 is inserted into the first receiving portion 230, such that the sample 500 or the primary reagent 510 can be introduced into and received in the first receiving portion 230. The second receiving portion 240 may have the shape of a cylinder having a second diameter 240a, which is smaller than the first diameter 230a, and may include a separation membrane 210 disposed at a lower end thereof. Since the first tube 200 is closed at a bottom thereof by the separation membrane 210, the primary reagent 510 or the sample 500 can be received in the first tube 200 and a primary reaction solution can be prepared through primary reaction inside the first tube 520.

The fluid-flow guide portion 250 may be formed in a tapered shape between the first receiving portion 230 and the second receiving portion 240. The fluid flow guide portion 250 may have an upper end having the first diameter 230a and a lower end having the second diameter 240a smaller than the first diameter 230a to define an inclined plane connecting the first receiving portion 230 to the second receiving portion 240, thereby guiding the primary reaction solution 520 to flow from the first receiving portion 230 to the second receiving portion 240.

The first tube 200 may further include a cap coupling portion 260, a second tube coupling portion 270, a grip 280, and a first tube O-ring groove 290.

The cap coupling portion 260 may be formed at the upper portion of the first tube 200 to be coupled to the cap 100 and may have a first tube thread 261 formed on an upper outer surface of the first tube 200 to be screwed into the cap 100 to seal the first tube 200.

The second tube coupling portion 270 may be formed at the lower portion of the first tube 200 to be coupled to the second tube 300 and may have a connection thread 271 formed on a lower inner surface of the first tube 200 to be screwed into an upper portion of the second tube 300, thereby connecting the first tube 200 to the second tube 300 while sealing the second tube 300.

Preferably, the second tube coupling portion 270 is formed to surround the second receiving portion 240 with a predetermined gap therebetween. Upon coupling the first tube 200 to the second tube 300, the second receiving portion 240 may be inserted into the second tube 300 to support the second tube 300.

The grip 280 may be formed on a lower outer surface of the first tube 200 and may include multiple protrusions formed at regular intervals along an outer circumferential surface of the second tube coupling portion 270 and each vertically extending in a longitudinal direction of the first tube 200. The grip 280 serves to prevent slipping upon coupling of the first tube 200 to the cap 100 or the second tube 300.

In addition, the first tube 200 may further include a first tube O-ring groove 290 formed to a predetermined radial depth on an inner upper end of the second tube coupling portion 270. Upon coupling of the first tube 200 to the second tube 300, the O-ring 400 may be inserted into the first tube O-ring groove 290 to seal the second tube 300, thereby preventing leakage of the secondary reagent 511 or the sample 500.

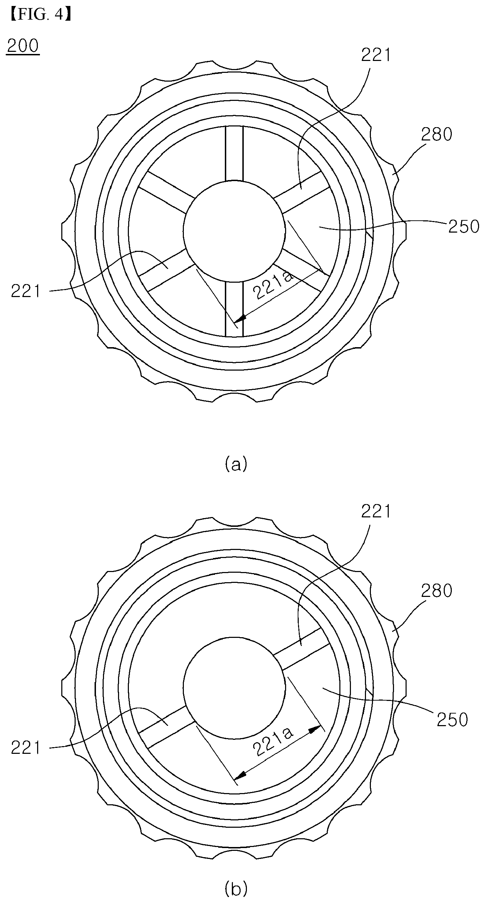

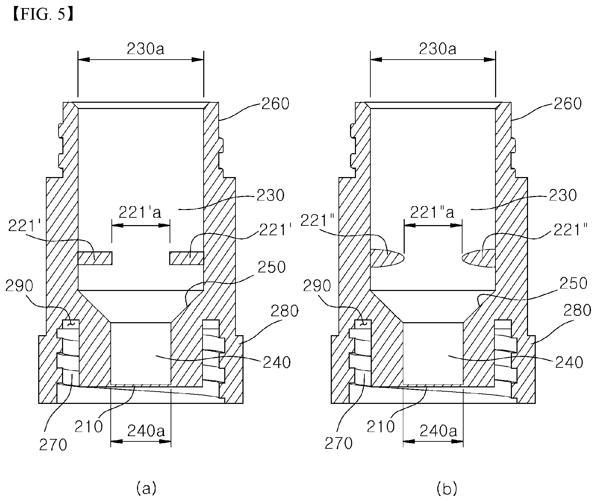

FIG. 4 and FIG. 5 are schematic views of the stopper of the sample pretreatment tube according to various embodiments of the present invention.

Referring to FIG. 4, at least two stopper wings 221 protruding from the inner surface of the first tube and facing each other may be disposed in the fluid flow guide portion 250. Here, a distance 221a between respective tips of a pair of opposing stopper wings may be the same as the second diameter 240a of the second receiving portion 240.

Since the stopper wings 221 protrude from the inner surface of the first tube to face each other, the pipette 20 inserted from the outside of the sample pretreatment tube can be vertically moved inside the first tube 200 while being supported by the stopper 221, and thus can easily break through the separation membrane 210.

The pipette 20 has the shape of a tube having a wide upper portion and a downwardly tapered lower portion. Accordingly, when the pipette 20 is inserted into the first tube 200 and is pushed through the separation membrane 210, the stopper 220 disposed in the fluid flow guide portion 250 may limit the insertion depth of the pipette 20 by allowing a portion of the pipette 20 having a diameter corresponding to the distance 221a between the respective tips of the pair of opposing stopper wings to be caught by the stopper wings of the stopper 220. As a result, the lower portion of the pipette 20, which has a smaller diameter than the second diameter 240a, is located at the lower end of the fluid flow guide portion 250, which has the second diameter 240a equal to the distance 221a between the respective tips of the pair of opposing stopper wings. Accordingly, a space can be formed between the pipette 20 and the lower end of the fluid flow guide 250, whereby the primary reaction solution 520 can be smoothly discharged to the second tube 300 through the space. Accordingly, it is possible to prevent a fluid from spilling out of the first tube 200.

Referring to FIG. 5, multiple stopper wings 221'; 221" may be formed on an inner side surface of the first receiving portion 230, which is separated a predetermined distance from the fluid flow guide portion 250.

The multiple stopper wings 221'; 221" may radially protrude inwards from the inner side surface of the first receiving portion 230 and may be arranged at regular intervals. In addition, the stopper wings 221'; 221" may have various shapes. A distance 221'; 221" between tips of a pair of opposing stopper wings may be set to be equal to the second diameter 240a.

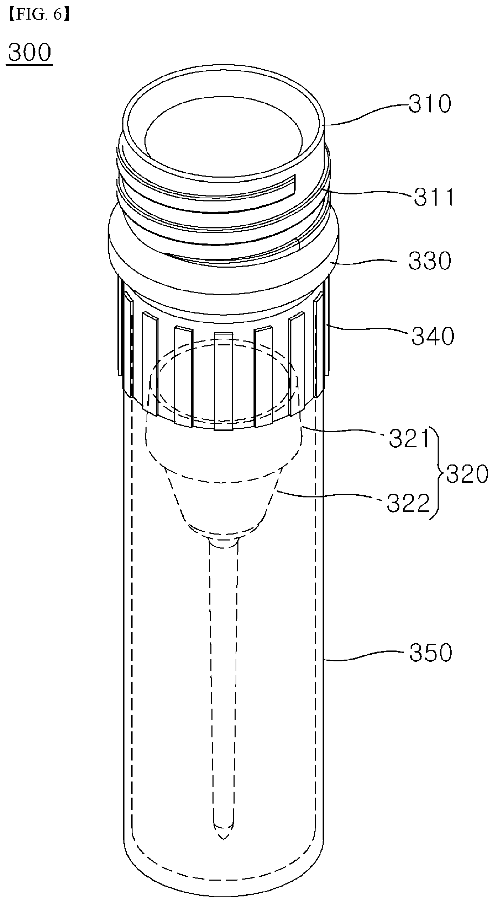

FIG. 6 is a schematic view of the second tube of FIG. 1.

Referring to FIG. 6, the second tube 300 according to the present invention may include a first tube coupling portion 310, a receiving portion 320, a first tube support 330, and a second tube grip 340.

The first tube coupling portion 310 may be formed at the upper portion of the second tube 300 to be coupled to the lower portion of the first tube 200 and may have a second tube thread 311 formed on an upper outer surface of the second tube 300 to be screwed into the first tube 200 to seal the second tube 300.

The receiving portion 320 of the second tube may receive the secondary reagent 511 and the primary reaction solution 520 discharged from the first tube to perform secondary reaction. The receiving portion 320 of the second tube may include a first receiving portion 321 having a cylindrical shape and a second receiving portion 322 extending in a tapered shape from a lower end of the first receiving portion 321 and having a closed tip.

The first tube support 330 may radially protrude outwards from an outer circumferential surface of the second tube 300 by a predetermined length and may be disposed under the first tube coupling portion 310 to support the first tube 200 coupled to the first tube coupling portion 310.

The second tube grip 340 may include multiple protrusions formed at regular intervals along an outer circumferential surface of the receiving portion 320 of the second tube and each vertically extending in a longitudinal direction of the second tube. The second tube grip 340 serves to prevent slipping upon coupling of the first tube 200 to the second tube 300.

In addition, the second tube 300 may further include a skirt 350. The skirt 350 may vertically extend a predetermined length to surround the second receiving portion 322 and may be placed on the ground to support the second tube 300 such that the second tube 300 can stand alone without falling down.

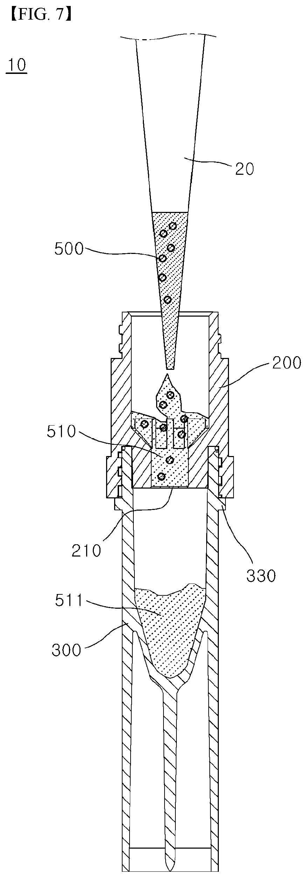

FIG. 7 to FIG. 9 are views illustrating operation of the sample pretreatment tube according to one embodiment of the present invention.

Operation of the sample pretreatment tube according to this embodiment is as follows:
First, referring to FIG. 7, the sample pretreatment tube 10 according to the present invention is shown. In the sample pretreatment tube 10, the first tube 200 having the primary reagent 510 therein is coupled to the second tube 300 having the secondary reagent 511 therein. Here, the primary reagent 510 is retained in the first tube 200 by the separation membrane 210. When the cap 100 is opened and the sample 500 is introduced into the first tube 200 using the pipette 20, the primary reaction solution 520 is prepared through primary reaction between the primary reagent 510 and the sample 500.

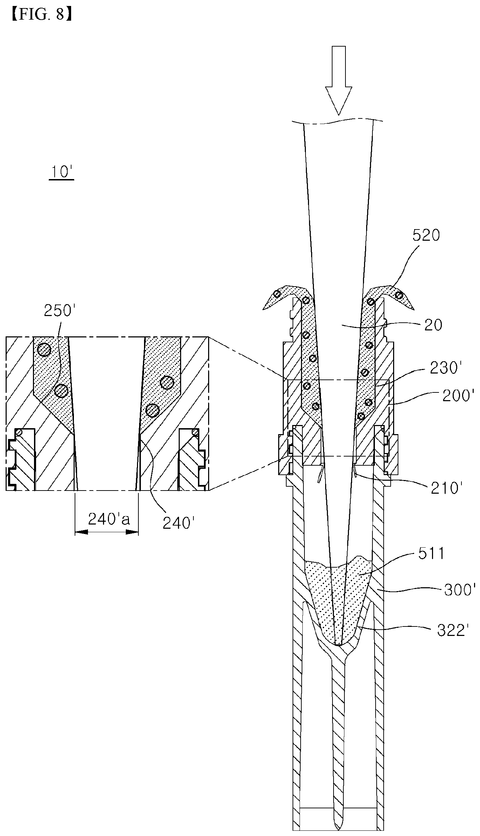

Referring to FIG. 8, a sample pretreatment tube 10' without the stopper 220 is shown. In order to discharge the primary reaction solution 520 to the second tube 300', the pipette 20 is inserted into the first receiving portion 230' to pass through the first receiving portion 230' while breaking through the separation membrane 210', and then is tightly fitted into the lower end of the fluid flow guide portion 250', that is, the upper end of the second receiving portion 240', which has the second diameter 240'a. As a result, the lower end of the fluid flow guide portion 250' is blocked and the primary reaction solution 520 cannot be discharged to the second tube 300', making it impossible to perform secondary reaction. In addition, since an available internal volume of the first tube 200' is reduced by the volume of the pipette 20 inserted into the first tube 200', the primary reaction solution 520 can spill out of the first tube 200'.

In addition, the pipette 20 having passed through the separation membrane 210' can be inserted into the second tube 300' to the extent that the tip of the pipette 20 contacts the second receiving portion 322' of the second tube 300', causing damage to the second tube 300'.

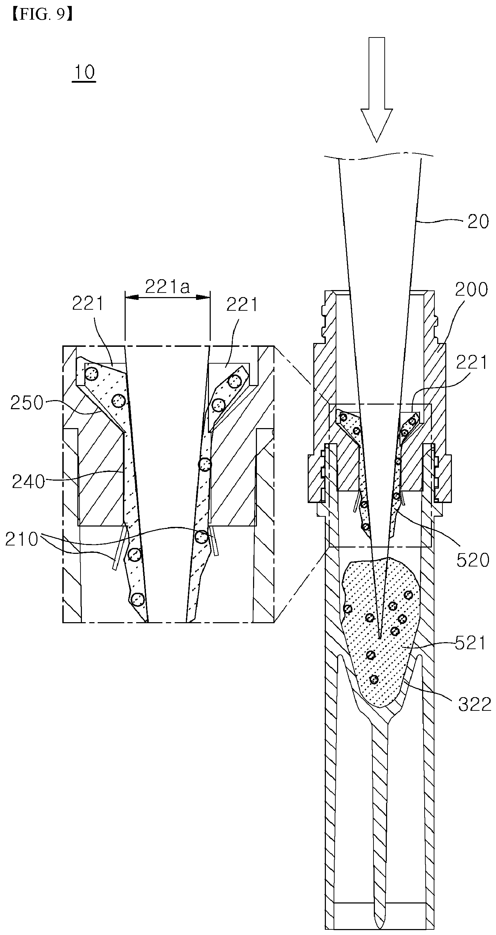

Referring to FIG. 9, the sample pretreatment tube 10 with the stopper 220 is shown. When the pipette 20 is pushed through the separation membrane 210 to discharge the primary reaction solution 520 to the second tube 300, the stopper 220 disposed in the fluid flow guide portion 250 can limit the insertion depth of the pipette 20 by allowing a portion of the pipette 20 having a diameter corresponding to the distance 221a between the respective tips of the pair of opposing stopper wings to be caught by the stopper wings of the stopper 220, whereby a space can be formed between the pipette 20 and the lower end of the fluid flow guide portion 250, that is, the upper end of the second receiving portion 240 having the second diameter 240a. Accordingly, the primary reaction solution 520 can flow into the second receiving portion 240 and then can be discharged to the second tube 300 through the broken separation membrane 210 at the lower end of the second receiving portion 240, whereby the primary reaction solution can be prevented from spilling out of the first tube 200.

In addition, since the insertion depth of the pipette 20 having passed through the separation membrane 210 is limited by the stopper 220 such that the tip of the pipette does not contact the second receiving portion 322 of the second tube, it is possible to prevent damage to the second tube 300 and to ensure smooth collection of the secondary reaction solution 521 prepared through reaction between the primary reaction solution 520 and the secondary reagent 511.

Referring again to FIG. 1, the sample pretreatment tube may further include an additional tube (not shown) disposed between the first tube 200 and the second tube 300, wherein the additional tube includes a separation membrane disposed at a lower end thereof and having a predetermined thickness to receive an additional reagent therein. The additional tube (not shown) may have the same shape as the first tube 200, and may include multiple separation membranes disposed therein. In addition, the additional tube (not shown) may include multiple additional tubes disposed between the first tube 200 and the second tube 300 to perform an n^{th} order reaction (a 3^{rd} order reaction, a 4^{th} order reaction, ...).

Alternatively, instead of disposing the additional tube (not shown) between the first tube 200 and the second tube 400, multiple separation membranes may be disposed in the first tube 200 to perform an n^{th} order reaction.

Although some embodiments have been described herein, it should be understood that these embodiments are provided for illustration only and are not to be construed in any way as limiting the present invention, and that various modifications, changes, alterations, and equivalent embodiments can be made by those skilled in the art without departing from the spirit and scope of the invention. In addition, these modifications and the like are not to be regarded as a departure from the spirit and prospect of the present invention.

### [Industrial Applicability]

The sample pretreatment tube according to the present invention is industrially applicable to the field of sample pretreatment technology that can easily perform sequential reactions through injection of precise volumes of liquid upon repeated sample pretreatment.

## Claims

1. A sample pretreatment tube comprising:
a cap;
a first tube coupled at an upper portion thereof to the cap and formed at a lower portion thereof with a separation membrane having a predetermined thickness to receive a primary reagent therein;
a second tube coupled to the lower portion of the first tube and receiving a secondary reagent therein; and
a stopper formed inside the first tube to limit an insertion depth of a pipette inserted into the sample pretreatment tube and to facilitate a flow of a reaction solution.

2. The sample pretreatment tube according to claim 1, wherein the stopper comprises multiple stopper wings protruding radially inward from an inner surface of the first tube, the multiple stopper wings being arranged at regular intervals in a radial pattern.

3. The sample pretreatment tube according to claim 1, wherein the first tube comprises: a cap coupling portion having a first tube thread formed on an upper outer surface of the first tube; a second tube coupling portion having a connection thread formed on a lower inner surface of the first tube; and a grip formed on a lower outer surface of the first tube.

4. The sample pretreatment tube according to claim 1, further comprising:
an additional tube disposed between the first tube and the second tube and formed at a lower portion thereof with a separation membrane having a predetermined thickness to receive an additional reagent therein.
